Europäisches Patentamt

European Patent Office

Office européen des brevets

(19)

(11) **EP 0 456 312 B1**

(12) **EUROPÄISCHE PATENTSCHRIFT**

(45) Veröffentlichungstag und Bekanntmachung des Hinweises auf die Patenterteilung:
**28.08.1996 Patentblatt 1996/35**

(51) Int Cl.⁶: **H04N 9/64**

(21) Anmeldenummer: **91201054.3**

(22) Anmeldetag: **03.05.1991**

(54) **Schaltungsanordnung zur Unterdrückung von Cross-Color-Störungen**

Cross-colour suppression device

Circuit pour la suppression de l'intermodulation de couleur

(84) Benannte Vertragsstaaten:
**DE FR GB IT**

(30) Priorität: **07.05.1990 DE 4014498**

(43) Veröffentlichungstag der Anmeldung:
**13.11.1991 Patentblatt 1991/46**

(73) Patentinhaber:
• **Philips Patentverwaltung GmbH
22335 Hamburg (DE)**
Benannte Vertragsstaaten:
**DE**
• **Philips Electronics N.V.
5621 BA Eindhoven (NL)**
Benannte Vertragsstaaten:
**FR GB IT**

(72) Erfinder:
• **Böhme, Siegfried
W-2000 Hamburg 50 (DE)**
• **Gutsmann, Dieter
W-2000 Hamburg 61 (DE)**

(74) Vertreter: **von Laue, Hanns-Ulrich, Dipl.-Ing. et al
Philips Patentverwaltung GmbH,
Röntgenstrasse 24
22335 Hamburg (DE)**

(56) Entgegenhaltungen:
FR-A- 2 296 337

• **PATENT ABSTRACTS OF JAPAN vol. 10, no. 158
(E-409)6. Juni 1986 & JP-A-61 012 192 (NIPPON
VICTOR KK)**
• **PATENT ABSTRACTS OF JAPAN vol. 12, no. 244
(E-631)10. Februar 1988 & JP-A-63 031 387
(SONY CORP).**

## Beschreibung

Die Erfindung betrifft eine Schaltungsanordnung zur Unterdrückung des Übersprechens von Helligkeits-Signalanteilen eines Farbfernsehsignals in einen Farbkanal eines Farbdekoders, in welchem ein einem oder mehreren Farbhilfsträgern in Frequenzmodulation aufmoduliertes Farbsignal einen Demodulator durchläuft und in welchem eine Pegelregelung des Farbsignals in der Weise vorgenommen wird, daß in dem Farbfernsehsignal enthaltene Farbsynchronimpulse auf einen Soll-Pegelwert geregelt werden (siehe z.B. FR-A-2 296 337).

Bei der Dekodierung von Fernsehsignalen, deren Farbsignale auf einen oder mehrere Farbhilfsträger aufmoduliert sind, tritt das Problem auf, daß Helligkeitssignale in den Farbkanal des Farbdekoders überspreche und dort zu unerwünschten Farbkomponenten führen. Diese Störungen werden auch als Cross-Color-Störungen bezeichnet. Sie entstehen dadurch, daß in dem Frequenzbereich, in dem von dem Farbdekoder auftretende Modulationen als Farbsignale interpretiert werden, auch Helligkeitssignale auftreten können, die dann ebenfalls vom dem Farbdekoder als Farbsignale interpretiert werden und somit zu unerwünschten Farbstörungen führen.

Bei Fernsehnormen, nach denen eine Amplitudenmodulation der Farbinformationen auf einen Farbhilfsträger vorgesehen ist, wie z.B. die Pal- oder NTSC-Normen, liegt eine spektrale Frequenz-Verkämmung der Spektren des Farbhilfsträgers und des Helligkeitssignals vor, so daß eine Reduktion der Cross-Color-Störung mittels Zeilen- oder Bildkammfiltern möglich ist. Eine solche Lösung scheidet jedoch für solche Farbfernsehnormen aus, gemäß denen das Farbsignal einem Farbhilfsträger in Frequenzmodulation aufmoduliert ist. Es tritt bei diesen Normen keine spektrale Verkämmung der beiden Signale auf, so daß eine Verminderung der Cross-Color-Störungen mittels der oben genannten Filter nicht möglich ist.

Aus der französischen Patentanmeldung FR-A-2296337 ist eine Schaltungsanordnung, wie im Oberbegriff des Anspruchs 1 beschrieben, bekannt.

Es ist Aufgabe der Erfindung, eine schaltungsanordnung zur Unterdrückung der Cross-Color-Störungen anzugeben, welche für Farbfernsehsignale geeignet ist, deren Farbsignal einem oder mehreren Farbhilfsträgern in Frequenzmodulation aufmoduliert ist.

Diese Aufgabe ist erfindungsgemäß dadurch gelöst, daß Mittel vorgesehen sind, welche aus dem Ausgangssignal des Demodulators ein Betrags-Signal generieren, welches den Momentanwert des Betrags der Amplitude des Farbsignals angibt, und daß ein erster und ein zweiter Komparator vorgesehen sind, in welchen das Betrags-Signal mit einem vorgebbaren unteren Grenzwert und einem vorgebbaren oberen Grenzwert verglichen wird und welche während derjenigen Zeiten, in denen das Betragssignal den unteren Grenzwert unterschreitet oder den oberen Grenzwert überschreitet, ein Schaltsignal generieren, während dessen Auftreten das Farbsignal unterdrückt wird.

Der Erfindung liegt die Erkenntnis zugrunde, daß in solchen Fernsehnormen, in denen das Farbsignal, beispielsweise bestehend aus zwei Farbdifferenzsignalen, einen oder mehreren Farbhilfsträgern in Frequenzmodulation aufmoduliert ist, der Farbhilfsträger grundsätzlich konstante Amplitude aufweist. Damit dies im Empfänger auch unter verschiedenen Empfangsbedingungen bzw. Abstimmungen des Tuners des Empfängers gilt, ist im Farbdekoder eine Pegelregelung des Farbsignals vorgesehen, bei der die in dem Farbfernsehsignal enthaltenen Farbsynchronimpulse ausgewertet werden. Diese Impulse sollen auf einen bestimmten Soll-Pegel gebracht werden. Dazu ist eine Pegelregelung vorgesehen, welche nicht nur die Farbsynchronimpulse sondern auch das gesamte auf den Farbhilfsträger aufmodulierte Farbsignal mitsamt dem Farbhilfsträger auf die gewünschten Pegelwerte bringt. Damit ist unabhängig von den Empfangsbedingungen gewährleistet, daß der Farbhilfsträger in dem Farbdekoder grundsätzlich einen konstanten Pegel aufweist. Zur Reduktion des Übersprechens von Helligkeits-Signalanteilen in den Farbkanal eines Farbdekoders ist nun vorgesehen, daß aus dem Farbsignal nach dessen Demodulation ein Betrags-Signal generiert wird, welches laufend den aktuellen Wert des Betrags der Amplitude des Farbsignals angibt. Dieses Betrags-Signal sollte grundsätzlich konstant bleiben, da ja auch die Amplitude des Farbhilfsträgers, auf den das Farbsignal aufmoduliert ist, im wesentlichen konstant bleibt.

Das so gewonnene Betrags-Signal wird zwei Komparatoren zugeführt, in welchen dieses Signal mit einem oberen und einem unteren Grenzwert verglichen wird, deren Werte vorgebbar sind. Nur wenn das Betragssignal zwischen diesen beiden Grenzwerten liegt, wird davon ausgegangen, daß es sich um das zu dekodierende Farbsignal handelt.

Wenn jedoch ein Übersprechen von Helligkeits-Signalanteilen auftritt, so können in dem Frequenzbereich des Farbsignals Signalamplituden auftreten, welche außerhalb des Bereichs der Grenzwerte liegen. Diese Signalanteile werden also daran erkannt, daß sie nicht in demjenigen Pegelbereich auftreten, in dem das Farbsignal normalerweise liegt. Wenn also das Betrags-Signal den unteren Grenzwert unterschreitet bzw. den oberen Grenzwert überschreitet, geben die beiden Komparatoren ein Schaltsignal ab, während dessen Auftreten das Farbsignal unterdrückt wird, so daß während dieser Zeiten das Farbfernsehsignal in dem Dekoder nachgeschalteten Schaltungsanordnungen als Helligkeitssignal quasi in Schwarz/Weiß-Wiedergabe weiterverarbeitet wird.

Die Werte des unteren bzw. oberen Grenzwertes sind so zu wählen, daß die Schaltungsanordnung einerseits bei leichten Schwankungen der Amplitude der Farbsignale noch nicht anspricht, andererseits jedoch genügend empfindlich auf Übersprechen von Helligkeits-Signalen anspricht.

Mit der erfindungsgemäßen Schaltungsanordnung ist es möglich, auch in Farbfernsehsignalen, in denen das Farbsignal einem oder mehreren Farbhilfsträgern in Frequenzmodulation aufmoduliert ist, Cross-Color-Störungen zu erkennen und zu unterdrücken.

Die oben beschriebene Auswertung des Betrags-Signals ergibt bereits sehr gute Ergebnisse, kann aber noch weiter dadurch verfeinert werden, daß nicht nur die Amplitude des Farbsignals, sondern auch dessen Frequenzhub ausgewertet wird. Dazu ist nach einer Ausgestaltung der Erfindung vorgesehen, daß Mittel vorgesehen sind, welche aus dem Ausgangssignal des Demodulators ein Frequenz-Signal generieren, welches den Momentanwert des Frequenzhubes des Farbsignals angibt, und daß ein dritter und ein vierter Komparator vorgesehen sind, in welchen das Frequenz-Signal mit einem vorgebbaren unteren Grenzwert und einem vorgebbaren oberen Grenzwert verglichen wird und welche während derjenigen Zeiten, in denen das Frequenz-Signal den unteren Grenzwert unterschreitet oder den oberen Grenzwert überschreitet, ein zweites Schaltsignal generieren, während dessen Auftreten das Farbsignal unterdrückt wird.

Bei dieser Ausgestaltung der Erfindung sind zusätzlich Mittel vorgesehen, welche ein Frequenzsignal generieren, das den Momentanwert des Frequenzhubes des Frequenzsignals angibt. Auch dieses Signal wird mittels zweier Komparatoren ausgewertet, welche dann ein Schaltsignal angeben, wenn das Frequenz-Signal nicht in einem Wertebereich zwischen einem unteren Frequenz-Grenzwert und einem oberen Frequenz-Grenzwert liegt. Es wird dann ebenfalls der Farbkanal in dem Farbdekoder abgeschaltet, d.h. also solange das Schaltsignal auftritt, auf Schwarz-Weiß Wiedergabe geschaltet.

Es wird hier also zusätzlich überprüft, ob die augenblicklich auftretenden Frequenzen des Farbsignals in dem zulässigen Frequenzbereich liegen, der nach der Farbhilfs-Übertragungsnorm des Farbfernsehsignals für den Farbhilfsträger vorgesehen ist. Liegen die auftretenden Frequenzen außerhalb bzw. deutlich außerhalb dieses Bereichs, so handelt es sich mit großer Wahrscheinlichkeit um ein ) Übersprechen von Helligkeits-Signalanteilen in den Farbkanal.

Nach einer weiteren Ausgestaltung der Erfindung ist vorgesehen, daß die Unterdrückung des Farbsignals in der Weise 5 vorgenommen wird, daß das Farbsignal durch ein Signal mit einem Wert entsprechend farbloser Wiedergabe ersetzt wird. Das Farbsignal, das als digitales Signal in zeitdiskreten Abtastwerten vorliegt, soll während der Zeiten, in denen eines der Schaltsignale auftritt, in der Weise unterdrückt werden, daß quasi eine farblose Wiedergabe erreicht wird. Es ist dazu durch einen entsprechenden digitalen Wert zu ersetzen. In den meisten Fällen wird es sich dabei um den Wert Null handeln.

Nach einer weiteren Ausgestaltung der Erfindung ist vorgesehen, daß die Unterdrückung des Farbsignals in der Weise vorgenommen wird, daß während des Auftretens eines der Schaltsignale einem in dem Farbdekoder vorgesehenen Deemphasis-Filter eingangsseitig anstelle des demodulierten Farbsignals ein Wert entsprechend farbloser Wiedergabe zugeführt und das Ausgangssignal des Filters durch denselben Wert ersetzt wird.

Ist in dem Farbdekoder ein Deemphasis-Filter vorgesehen, wie dies beispielsweise bei Signalen der SECAM-Norm erforderlich ist, so kann die Unterdrückung des Farbsignals vorteilhaft in der Weise vorgenommen werden, daß während des Auftretens eines der Schaltsignale dem Eingang des Deemphasis-Filters der Wert Null eingeprägt wird. Gleichzeitig wird das Ausgangssignal des Deemphasis-Filters ebenfalls durch den Wert Null ersetzt. Hierdurch wird erreicht, daß einerseits am Ausgang des Deemphasis-Filters das Farbsignal "hart" ausgeschaltet wird; dies geschieht nur während des Überschreitens der Amplituden- bzw. Frequenz-Grenzwerte. Würde man sich auf diese Maßnahme beschränken, würden jedoch der vorangegangene bzw. nachfolgende Wert des Signals in voller Höhe am Ausgang des Deemphasis-Filters erscheinen. Um diese Übergänge zu verschleifen, wird auch dem Eingang des Deemphasis-Filters der Wert Null eingeprägt. Da ein solches Filter eine starke Tiefpaßcharakteristik aufweist, kommt es zu einer Mittelwertbildung, die auch die benachbarten, am Ausgang des Deemphasis-Filters nicht ausgeblendeten Werte, reduziert. Mit dieser Anordnung wird vermieden, daß beim Ein- bzw. Ausschalten des Farbkanals harte Übergänge in dem Signal auftreten.

Nach einer weiteren Ausgestaltung der Erfindung ist vorgesehen, daß es sich bei dem Demodulator um einen Quadratur-Demodulator handelt, daß Mittel zur Koordinatentransformation vorgesehen sind, denen die Ausgangssignale des Quadraturdemodulators zugeführt werden und in dem aus diesen Signalen das Betrags-Signal und ein weiteres Signal gewonnen werden, welches die momentane Phasenlage des Farbsignals angibt und welches zur Gewinnung des Frequenz-Signals einem Differenzierer zugeführt wird.

In bekannten digitalen Farbdekodern ist vielfach ein Quadratur-Demodulator vorgesehen, welcher das demodulierte Farbsignal in zwei Phasenlagen liefert, die 90° zueinander versetzt sind. Diese Ausgangssignale des Quadraturdemodulators sind nun in der erfindungsgemäßen Schaltungsanordnung zur Unterdrückung des Übersprechens von Helligkeitssignalen in den Farbkanal des Farbdekoders vorteilhaft dazu einsetzbar, das Betrags-Signal und das Frequenz-Signal zu gewinnen. Dazu werden die Ausgangssignale des Quadraturdemodulators einer Anordnung zur Koordinatentransformation zugeführt, in der aus den beiden Signalen, die in ihrer Phasenlage 90° zueinander versetzt sind, daß Betrags- und ein Phasen-Signal gewonnen werden. Dasjenige Signal, das die momentane Phasenlage des Farbsignals angibt, wird nun zur Gewinnung des Frequenz-Signals einem Differenzierer zugeführt, dessen Ausgangssignal das Frequenz-Signal darstellt.

Sowohl der Differenzierer wie auch die Anordnung zur Koordinaten-Transformation können in einem Farbdekoder ohnehin vorgesehen sein und können für die erfindungsgemäße Schaltungsanordnung mitgenutzt werden.

Nach einer weiteren Ausgestaltung der Erfindung ist vorgesehen, daß die Werte der unteren und oberen Grenzwerte in Abhängigkeit des Pegels des Farbsignals, den dieses vor der Pegelregelung aufweist, in der Weise nachgeführt werden, daß die Beträge der Grenzwerte bei relativ geringem Pegel des Farbsignals vergrößert und bei relativ hohen Pegel verkleinert werden.

Wie oben bereits erläutert wurde, sollte das Betrags-Signal bei störungsfreier Übertragung einen weitgehend konstanten Wert aufweisen. In entsprechender Weise sollte das Frequenz-Signal nur in dem zulässigen Frequenzhubbereich des Farbhilfsträgers liegen. Für die Festlegung der oberen und unteren Grenzwerte ist jedoch in jedem Falle ein Sicherheitsabstand erforderlich, da die Schaltungsanordnung nicht bereits bei geringen Störungen des Farbsignals ansprechen soll.

Weist das Farbsignal einen relativ geringen Pegel auf und wird es deshalb in dem Farbdekoder relativ hoch verstärkt, so werden auch Störungen in entsprechender Weise mit verstärkt. Dies kann unter Umständen dazu führen, daß die Grenzwerte über- bzw. unterschritten werden, obwohl es sich um das Farbsignal handelt und kein oder wenig übersprechendes Luminanzsignals vorliegt.

Um die genannten Grenzwerte dennoch möglichst eng auslegen zu können, ist es vorteilhaft, sie in Abhängigkeit des Pegels des Farbsignals, den dieses vor Durchlaufen der Pegelregelung aufweist, nachzuführen. Da insbesondere bei relativ geringen Pegel des Farbsignals mit erhöhten Störungen zu rechnen ist, sind in diesem Falle die Beträge der Grenzwerte eher größer zu wählen, während bei relativ hohen Pegel wenig Störungen erwartet werden, so daß in diesem Falle die Grenzwerte relativ eng gefaßt werden können.

Bei dieser Auslegung ist es also quasi möglich, die Empfindlichkeit des Ansprechens der Schaltungsanordnung in Abhängigkeit des Pegels des Farbsignals und damit der erwarteten Störungen zu wählen.

Die Nachführung der Grenzwerte kann dabei z.B. in Abhängigkeit einer Stellgröße der Pegelregelung vorgenommen werden. Bei der Stellgröße würde es sich im allgemeinen um diejenige handeln, welche die Verstärkung des Farbsignals zur Erreichung des Soll-Pegelwertes steuert.

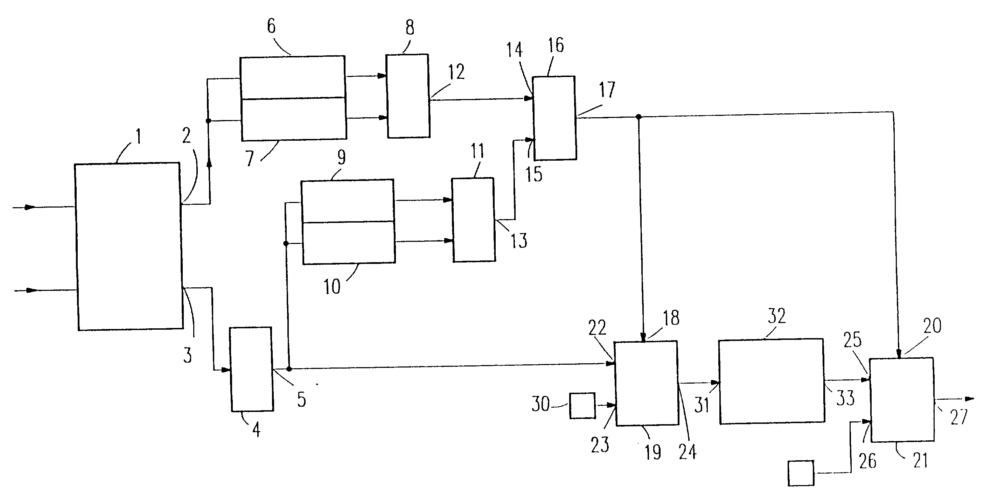

Anhand der Zeichnung wird ein Ausführungsbeispiel der Erfindung näher erläutert.

In der einzigen Figur ist ein Blockschaltbild einer Ausführungsform der erfindungsgemäßen Schaltungsanordnung zusammen mit einigen Elementen eines im übrigen nicht dargestellten Farbdekoders dargestellt.

Es wird im folgenden davon ausgegangen, daß ein in der Figur nicht vollständig dargestellter digitaler Farbdekoder einen Quadraturmischer aufweist, in welchem ein digitales Farbsignal demoduliert wird, und welcher zwei Ausgangssignale liefert, die in ihrer Phasenlage um 90° zueinander versetzt sind. Wird dem Dekoder beispielsweise ein Signal der SECAM-Norm zugeführt, so tritt das Farbsignal in Form zweier Farbdifferenzsignale auf, die zwei Farbhilfsträgern verschiedener Frequenzen aufmoduliert sind, und die einzeln von Zeile zu Zeile alternierend auf den jeweiligen Farbhilfsträger aufmoduliert auftreten. Die Farbdifferenzsignale werden in dem Quadraturdemodulator heruntergemischt, wobei der Oszillator des Quadraturdemodulators auf eine Frequenz eingestellt ist, die zwischen den Ruhefrequenzen der beiden Farbhilfsträger liegt.

Die beiden in ihrer Phasenlage um 90° zueinander versetzten Ausgangssignale des Quadraturmischers sind in der Darstellung gemäß der Figur einer Anordnung 1 zur Koodinatentransformation zugeführt. In dieser Anordnung 1 wird quasi ein Übergang von kartesischen Koordinaten zu Polarkoordinaten vorgenommen. Bezeichnet man die Eingangssignale der Anordnung 1 als Signale X und Y, so liefert die Anordnung 1 an Ausgängen 2 und 3 Signale r und φ, für die folgender Zusammenhang gilt:

$$r = \sqrt{X^2 + Y^2} \text{ und } \varphi = \arctan(Y/X).$$

Das Signal r, das an dem Ausgang 2 der Anordnung 1 auftritt, stellt das Betrags-Signal dar, welches den Betrag der Amplitude des Farbsignals angibt. Das Signal φ gibt die Phasenlage des Farbsignals an. Dieses Signal tritt am Ausgang 3 der Anordnung 1 auf und ist einem Differenzierer 4 zugeführt, an dessen Ausgang 5 ein Frequenz-Signal auftritt, das den Momentanwert des Frequenzhubes des Farbsignals angibt, also denjenigen Frequenzwert, um den das Farbsignal von der Ruhefrequenz des Farbhilfsträgers abweicht.

Somit steht am Ausgang 2 der Anordnung 1 das Betrags-Signal zur Verfügung, das in der erfindungsgemäßen Schaltungsanordnung weiterverarbeitet wird. Dieses Signal kann in einem Farbdekoder außerdem zur Amplitudenregelung des Farbsignals herangezogen werden. Entsprechendes gilt für das am Ausgang 5 des Differenzierers 4 zur Verfügung stehende Frequenz-Signal. Dieses Signal wird jedoch nicht nur in der erfindungsgemäßen Schaltungsanordnung, sondern auch in einem in der Figur nur teilweise dargestellten Farbdekoder weiterverarbeitet, da dieses Signal die eigentliche Farbinformation darstellt.

In der erfindungsgemäßen Schaltungsanordnung zur Unterdrückung des Übersprechens von Helligkeits-Signalen in einen Farbkanal eines Farbdekoders sind ein erster Komparator 6 sowie ein zweiter Komparator 7 vorgesehen, denen das Betrags-Signal vom Ausgang 2 der Anordnung 1 zugeführt wird. In dem ersten Komparator 6 wird dieses Signal mit einem oberen Grenzwert und in dem zweiten Komparator 7 mit einem unteren Grenzwert verglichen. Der erste Komparator 6 gibt dann ein Ausgangssignal an ein nachgeschaltetes ODER-Gatter 8, wenn der obere Grenzwert durch das Betragssignal überschritten wird. In entsprechender Weise gibt der zweite Komparator 7 während derjenigen Zeiten, in denen das Betragssignal einen unteren Grenzwert unterschreitet, ebenfalls ein entsprechendes Schaltsignal an das ODER-Gatter 8. Das ODER-Gatter 8 liefert also dann ein Ausgangssignal, wenn eines der beiden Schaltsignale des ersten Komparators 6 oder des zweiten Komparators 7 auftritt.

Das am Ausgang 5 des Differenzierers 4 vorhandene Frequenz-Signal wird einem dritten Komparator 9 und einem vierten Komparator 10 zugeführt. In dem dritten Komparator 9 wird dieses Frequenz-Signal mit einem oberen Grenzwert verglichen, welcher oberhalb desjenigen Frequenzwertes liegt, den das Frequenz-Signal bei maximalem Frequenzhub zu höheren Frequenzen hin annehmen darf. In entsprechender Weise vergleicht der vierte Komparator 10 das Frequenzsignal mit einem unteren Frequenzwert, der unterhalb desjenigen Frequenzwertes liegt, den das Farbsignal bei maximalem Frequenzhub zu niedrigen Frequenzen hin annehmen darf. Bei Überschreiten des oberen Grenzwertes liefert der dritte Komparator 9 und bei Unterschreiten des unteren Grenzwertes der vierte Komparator 10 ein Ausgangssignal an ein den beiden Komparatoren nachgeschaltetes ODER-Gatter 11.

Ein Ausgang 12 des ODER-Gatters 8 ist mit einem Eingang 14 eines weiteren ODER-Gatters 16 und ein Ausgang 13 des ODER-Gatters 11 mit einem weiteren Eingang 15 des ODER-Gatters 16 verbunden. Am Ausgang 12 des ODER-Gatters 8 tritt während derjenigen Zeiten ein Ausgangssignal auf, wenn das Betrags-Signal den oberen bzw. unteren vorgegebenen Grenzwert überschreitet. Entsprechendes gilt für das am Ausgang 13 des ODER-Gatters 11 auftretende Signal, das nur in denjenigen Zeiten auftritt, in denen das Frequenz-Signal den zulässigen Wertebereich zwischen oberen und unteren Grenzwert verläßt.

Die beiden Ausgangssignale der ODER-Gatter 8 und 11 werden in dem ODER-Gatter 16 wiederum miteinander verknüpft, so daß an einem Ausgang 17 des ODER-Gatters 16 während derjenigen Zeiten ein Schaltsignal auftritt, in denen einer der vier Grenzwerte über- bzw. unterschritten wurde.

Dieses am Ausgang 17 des ODER-Gatters 16 auftretende Schaltsignal ist einem Schalteingang 18 eines ersten Multiplexers 19 und einem Schalteingang 20 eines zweiten Multiplexers 21 zugeführt.

Der Multiplexer 19 weist einen ersten Signaleingang 22 und einen zweiten Signaleingang 23 sowie einen Ausgang 24 auf. Während derjenigen Zeiten, in denen an dem Schalteingang 18 des Multiplexers 19 das Schaltsignal auftritt, wird in dem Multiplexer das an seinem zweiten Signaleingang 23 anliegende Signal auf den Ausgang 24 geschaltet. Liegt an dem Schalteingang 18 dagegen kein Schaltsignal an, so wird in dem Multiplexer 19 das an seinem ersten Signaleingang 22 anliegende Signal auf den Ausgang 24 geschaltet. Der zweite Multiplexer 21 weist ebenfalls einen ersten Signaleingang 25, einen zweiten Signaleingang 26 sowie einen Ausgang 27 auf. Der zweite Multiplexer 21 schaltet zwischen seinen beiden Siganleingängen 25 und 26 in Abhängigkeit des an seinem Schalteingang 20 anliegenden Schaltsignals in entsprechender Weise um wie der erste Multiplexer 19.

Der erste Signaleingang 22 des Multiplexers 19 ist mit dem Ausgang 5 des Differenzierers 4 verbunden. Der zweite Signaleingang 23 des Multiplexers 19 ist mit einem Signalelement 30 verbunden.

Der Ausgang 24 des Multiplexers 19 ist mit einem Eingang 31 eines Deemphasis-Filters 32 verbunden, welches einen Ausgang 33 aufweist, der mit dem ersten Signaleingang 25 des zweiten Multiplexers 21 verbunden ist. Der zweite Signaleingang 26 des Multiplexers 21 ist mit einem Schaltungselement 34 verbunden.

Während derjenigen Zeiten, in denen am Ausgang 17 des ODER-Gatters 16 und somit an den Schalteingängen 18 bzw. 20 der Multiplexer 19 und 21 kein Schaltsignal auftritt, sind beide Multiplexer 19 und 21 auf ihren ersten Signaleingang 22 bzw. 25 geschaltet. Somit durchläuft das am Ausgang 5 des Differenzierers 4 anliegende Frequenz-Signal den ersten Multiplexer 19, das Deemphasisfilter 32, sowie den zweiten Multiplexer 21 und steht an dessen Ausgang 27 zur weiteren Signalverarbeitung zur Verfügung.

Sobald jedoch an dem Ausgang 17 des ODER-Gatters 16 das Schaltsignal auftritt, das angibt, daß einer der Grenzwerte über- bzw. unterschritten wurde, schalten der Multiplexer 19 auf seinen zweiten Eingang 23 sowie der Multiplexer 21 auf seinen zweiten Signaleingang 26. Die mit diesen Signaleingängen verbundenen Schaltungselemente 30 bzw. 34 liefern ein solches Signal, das einer farblosen Wiedergabe entspricht, also dasjenige Farbsignal, das während der Zeiten auftritt, in denen Bildelemente ohne Farbanteil wiedergegeben werden. Bei üblicher Kodierung des Farbsignals wird es sich dabei im allgemeinen um die Werte Null handeln. Bei Auftreten eines Schaltsignals wird somit das am Ausgang 27 des Multiplexers 21 auftretende Ausgangssignal sofort auf Null gesetzt.

In entsprechender Weise wird während des Auftretens des Schaltsignals dem Eingang 31 des Deemphasis-Filters 32 über den ersten Multiplexer 19 ebenfalls der Wert Null zugeführt. Dies hat den Vorteil, daß harte Signalübergänge infolge der Tiefpaß-Charakteristik des Deemphasis-Filters 32 vermieden werden. So schalten die beiden Multiplexer 19 und 21 nach Ausbleiben des Schaltsignals wieder auf ihre ersten Signaleingänge 22 bzw. 25, so daß am Ausgang 27 des Multiplexers 21 wieder das Ausgangssignal des Deemphasis-Filters 32 anliegt. Mit Ausbleiben des Schaltsignals wird dem Deemphasis-Filters 32 wieder das Frequenzsignal zugeführt, so daß am Ausgang 23 des Deemphasis-Filters 32 und somit auch am Ausgang 27 des Multiplexers 21 ein langsamer Übergang vom Wert Null auf das gefilterte Frequenz-Signal stattfindet.

Die oberen bzw. unteren Grenzwerte der vier Komparatoren 6, 7, 9 und 10 können je nach Einsatzzweck und Auslegung der übrigen Schaltung des Farbdekoders in gewünschter Weise gewählt werden. In der Praxis haben sich für die oberen und unteren Betrags-Grenzwerte der Komparatoren 6 und 7 der doppelte bzw. halbe Amplitudenwert der Nominalamplitude des Farbhilfsträgers als vorteilhaft herausgestellt. Bezüglich der in den Komparatoren 9 und 10 mit dem Frequenzsignal verglichenen unteren bzw. oberen Frequenz-Grenzwerte haben sich diejenigen Werte als vorteilhaft herausgestellt, die dem doppelten Nominalwert des maximalen Frequenzhubes des Farbträgers entsprechen.

**Patentansprüche**

1. Schaltungsanordnung zur Unterdrückung des Übersprechens von Helligkeits-Signalanteilen eines Farbfernsehsignals in einen Farbkanal eines Farbdekoders, in welchem ein einem oder mehreren Farbhilfsträgern in Frequenzmodulation aufmoduliertes Farbsignal einen Demodulator durchläuft und in welchem eine Pegelregelung des Farbsignals in der Weise vorgenommen wird, daß in dem Farbfernsehsignal enthaltene Farbsynchronimpulse auf einen Soll-Pegelwert geregelt werden, dadurch gekennzeichnet, daß Mittel (1) vorgesehen sind, welche aus dem Ausgangssignal des Demodulators ein Betrags-Signal generieren, welches den Momentanwert des Betrags der Amplitude des Farbsignals angibt, und daß ein erster und ein zweiter Komparator (6, 7) vorgesehen sind, in welchen das Betrags-Signal mit einem vorgebbaren unteren Grenzwert und einem vorgebbaren oberen Grenzwert verglichen wird und welche während derjenigen Zeiten, in denen das Betragssignal den unteren Grenzwert unterschreitet oder den oberen Grenzwert überschreitet, ein Schaltsignal generieren, während dessen Auftreten das Farbsignal unterdrückt wird.

2. Schaltungsanordnung nach Anspruch 1, dadurch gekennzeichnet, daß Mittel (1) vorgesehen sind, welche aus dem Ausgangssignal des Demodulators ein Frequenz-Signal generieren, welches den Momentanwert des Frequenzhubes des Farbsignals angibt, und daß ein dritter und ein vierter Komparator (9, 10) vorgesehen sind, in welchen das Frequenz-Signal mit einem vorgebbaren unteren Grenzwert und einem vorgebbaren oberen Grenzwert verglichen wird und welche während derjenigen Zeiten, in denen das Frequenz-Signal den unteren Grenzwert unterschreitet oder den oberen Grenzwert überschreitet, ein zweites Schaltsignal generieren, während dessen Auftreten das Farbsignal unterdrückt wird.

3. Schaltungsanordnung nach Anspruch 1 oder 2, dadurch gekennzeichnet, daß die Unterdrückung des Farbsignals in der Weise vorgenommen wird, daß das Farbsignal durch ein Signal mit einem Wert entsprechend farbloser Wiedergabe ersetzt wird.

4. Schaltungsanordnung nach einem der Ansprüche 1 bis 3, dadurch gekennzeichnet, daß die Unterdrückung des Farbsignals in der Weise vorgenommen wird, daß während des Auftretens eines der Schaltsignale einem in dem Farbdekoder vorgesehenen Deemphasis-Filter (32) eingangsseitig anstelle des demodulierten Farbsignals ein Wert entsprechend farbloser Wiedergabe zugeführt und das Ausgangssignal des Filters durch denseblben Wert ersetzt wird.

5. Schaltungsanordnung nach einem der Ansprüche 1 bis 4, dadurch gekennzeichnet, daß es sich bei dem Demodulator um einen Quadratur-Demodulator handelt, daß Mittel zur Koordinatentransformation vorgesehen sind, denen die Ausgangssignale des Quadraturdemodulators zugeführt werden und in dem aus diesen Signalen das Betrags-Signal und ein weiteres Signal gewonnen werden, welches die momentane Phasenlage des Farbsignals angibt und welches zur Gewinnung des Frequenz-Signals einem Differenzierer (4) zugeführt wird.

6. Schaltungsanordnung nach einem der Ansprüche 1 bis 5, dadurch gekennzeichnet, daß die Werte der unteren und oberen Grenzwerte in Abhängigkeit des Pegels des Farbsignals, den dieses vor der Pegelregelung aufweist, in der Weise nachgeführt werden, daß die Beträge der Grenzwerte bei relativ geringem Pegel des Farbsignals vergrößert und bei relativ hohen Pegel verkleinert werden.

7. Schaltungsanordnung nach einem der Ansprüche 1 bis 4, dadurch gekennzeichnet, daß der obere bzw. untere Grenzwert für das Betragssignal etwa dem doppelten bzw. halben Nominalwert des Farbträgers entspricht.

8. Schaltungsanordnung nach einem der Ansprüche 1 bis 4, dadurch gekennzeichnet, daß der obere bzw. untere Grenzwert für das Frequenz-Signal so gewählt wird, daß die Grenzwerte dem doppelten Nominalwert des maximalen Frequenzhubes des Farbsignals entsprechen.

**9.** Schaltungsanordnung nach einem der Ansprüche 1 bis 8,
dadurch gekennzeichnet, daß es sich bei dem Farbfernsehsignal um ein solches der SECAM-Norm handelt.

**10.** Farbfernsehempfänger,
dadurch gekennzeichnet, daß er eine Schaltungsanordnung nach einem der Ansprüche 1 bis 9 aufweist.

**Claims**

**1.** A circuit arrangement for suppressing crosstalk of luminance signal portions of a color television signal in a chrominance channel of a color decoder, in which a chrominance signal frequency-modulated on one or more chrominance subcarriers passes through a demodulator and in which the level of the chrominance signal is controlled in such a way that color burst pulses in the color television signal have a nominal level, characterized in that means (1) are provided which generate a magnitude signal from the output signal of the demodulator, which magnitude signal indicates the instantaneous value of the magnitude of the chrominance signal amplitude, and in that a first and a second comparator (6, 7) are provided which compare the magnitude signal with a predeterminable lower limit value and a predeterminable upper limit value and generate a switching signal during periods when the magnitude signal falls below the lower limit value or exceeds the upper limit value, the chrominance signal being suppressed during the occurrence of said switching signal.

**2.** A circuit arrangement as claimed in Claim 1, characterized in that means (1) are provided which generate a frequency signal from the output signal of the demodulator, which frequency signal indicates the instantaneous value of the chrominance signal frequency deviation, and in that a third and a fourth comparator (9, 10) are provided which compare the frequency signal with a predeterminable lower limit value and a predeterminable upper limit value and generate a second switching signal during periods when the frequency signal falls below the lower limit value or exceeds the upper limit value, the chrominance signal being suppressed during the occurrence of said second switching signal.

**3.** A circuit arrangement as claimed in Claim 1 or 2, characterized in that the chrominance signal is suppressed in such a way that it is replaced by a signal having a value which corresponds to achromatic display.

**4.** A circuit arrangement as claimed in any one of Claims 1 to 3, characterized in that the chrominance signal is suppressed in such a way that instead of the demodulated chrominance signal a signal having a value which corresponds to achromatic display is applied to an input of a de-emphasis filter (32) within the color decoder during the occurrence of one of the switching signals, and in that an output signal of the filter is replaced by a signal having the same value.

**5.** A circuit arrangement as claimed in any one of Claims 1 to 4, characterized in that the demodulator is a quadrature demodulator, in that means for transforming coordinates are provided which receive the output signals of the quadrature demodulator in which the magnitude signal and a further signal are gained from said output signals, said further signal indicating the instantaneous phase position of the chrominance signal and being applied to a differentiator (4) for gaining the frequency signal.

**6.** A circuit arrangement as claimed in any one of Claims 1 to 5, characterized in that the magnitudes of the lower and upper limit values are corrected in dependence upon the chrominance signal level existing prior to the level control, such that the magnitudes of the limit values are increased when the chrominance signal has a relatively low level and are decreased when the chrominance signal has a relatively high level.

**7.** A circuit arrangement as claimed in any one of Claims 1 to 4, characterized in that the upper limit value for the magnitude signal substantially corresponds to the double nominal value of the chrominance subcarrier and in that the lower limit value of said signal substantially corresponds to half the nominal value of said subcarrier.

**8.** A circuit arrangement as claimed in any one of Claims 1 to 4, characterized in that the upper and lower limit values for the frequency signal are chosen to be such that said limit values correspond to the double nominal value of the maximum frequency deviation of the chrominance signal.

**9.** A circuit arrangement as claimed in any one of Claims 1 to 8, characterized in that the color television signal is of the SECAM-standard type.

**10.** A color television receiver, characterized in that it includes a circuit arrangement as claimed in any one of Claims 1 to 9.

## Revendications

1. Circuit de suppression de l'intermodulation de composantes du signal de luminance d'un signal de télévision couleur dans un canal couleur d'un décodeur couleur, dans lequel un signal couleur modulé sur une ou plusieurs sous-porteuses couleur en modulation de fréquence traverse un démodulateur et dans lequel un réglage de niveau du signal couleur est effectué de telle manière que les impulsions de synchronisation couleur contenues dans le signal de télévision couleur soient réglées sur une valeur de consigne de niveau, caractérisé en ce qu'il est prévu des moyens (1) qui génèrent, à partir du signal de sortie du démodulateur, un signal numérique qui indique la valeur instantanée du montant de l'amplitude du signal couleur et en ce qu'il est prévu un premier et un deuxième comparateur (6,7) dans lesquels le signal numérique est comparé à une valeur limite inférieure et à une valeur limite supérieure qui peuvent toutes deux être déterminées au préalable et qui, pendant les périodes au cours desquelles le signal numérique est inférieur à la valeur limite inférieure ou supérieur à la valeur limite supérieure, génèrent un signal de commutation pendant lequel le signal couleur est supprimé.

2. Circuit selon la revendication 1, caractérisé en ce qu'il est prévu des moyens (1) qui génèrent à partir du signal de sortie du démodulateur un signal de fréquence qui indique la valeur instantanée de l'excursion de fréquence du signal couleur et en ce qu'il est prévu un troisième et un quatrième comparateur (9, 10) dans lesquels le signal de fréquence est comparé à une valeur limite inférieure et à une valeur limite supérieure qui peuvent toutes deux être déterminées au préalable et qui, pendant les périodes au cours desquelles le signal de fréquence est inférieur à la valeur limite inférieure ou supérieur à la valeur limite supérieure, génère un deuxième signal de commutation pendant lequel le signal couleur est supprimé.

3. Circuit selon la revendication 1 ou 2, caractérisé en ce que la suppression du signal couleur est effectuée de telle manière que le signal couleur soit remplacé par un signal d'une valeur correspondant à une reproduction en noir et blanc.

4. Circuit selon l'une des revendications 1 à 3, caractérisé en ce que la suppression du signal couleur est effectuée de telle manière que, pendant l'incidence d'un des signaux de commutation, une valeur correspondant à une reproduction en noir et blanc est amenée à un filtre de désaccentuation (32) prévu dans le décodeur couleur côté entrée à la place du signal couleur démodulé et en ce que le signal de sortie du filtre est remplacé par cette même valeur.

5. Circuit selon l'une des revendications 1 à 4, caractérisé en ce que le démodulateur est un démodulateur en quadrature, en ce qu'il est prévu des moyens de transformation des coordonnées auxquels sont amenés les signaux de sortie du démodulateur en quadrature et dans lesquels sont obtenus, à partir de ces signaux, le signal numérique et un autre signal qui indique la position de phase instantanée du signal couleur et qui est amené à un différentiateur (4) pour l'obtention du signal de fréquence.

6. Circuit selon l'une des revendications 1 à 5, caractérisé en ce que les valeurs des valeurs limites inférieure et supérieure sont pilotées en fonction du niveau du signal couleur que celui-ci présente avant le réglage de niveau de telle manière que les valeurs des valeurs limites soient augmentées en cas de niveau relativement faible du signal couleur et réduites en cas de niveau relativement élevé.

7. Circuit selon l'une des revendications 1 à 4, caractérisé en ce que la valeur limite supérieure ou inférieure pour le signal numérique correspond approximativement au double et à la moitié de la valeur nominale de la sous-porteuse couleur.

8. Circuit selon l'une des revendications 1 à 4, caractérisé en ce que la valeur limite supérieure ou inférieure pouR le signal de fréquence est choisie de telle sorte que les valeurs limites correspondent au double de la valeur nominale de l'excursion de fréquence maximale du signal couleur.

9. Circuit selon l'une des revendications 1 à 8, caractérisé en ce que le signal de télévision couleur est un signal de norme SECAM .

10. Récepteur de télévision couleur, caractérisé en ce qu'il présente un circuit selon l'une des revendications 1 à 9.